# FASCICULE DE BREVET EUROPEEN

(11) **EP 2 208 963 B1**
(45) Date de publication et mention de la délivrance du brevet: **18.05.2011**
(21) Numéro de dépôt: 09179332.3
(22) Date de dépôt: 15.12.2009
(51) Int. Cl.: G01B 11/14, G01B 11/25, B62D 65/00

(54) **Procédé de mesure de jeux et d'affleurements**
Methode zur Messung von Spalten und Bündigkeiten
Method for measuring gaps and flushes

(30) Priorité: 14.01.2009 FR 0950165
(43) Date de publication de la demande: 21.07.2010
(73) Titulaire: Peugeot Citroën Automobiles SA, 78140 Vélizy-Villacoublay (FR)
(72) Inventeur: Calve, Gilbert, 35000 RENNES (FR)
(74) Mandataire: Allain, Laurent

(56) Documents cités:
- EP-A- 0 845 656
- US-A- 5 129 010
- US-B1- 6 529 283
- KOSMOPOULOS D ET AL: "Automated inspection of gaps on the automobile production line through stereo vision and specular reflection" COMPUTERS IN INDUSTRY, ELSEVIER SCIENCE PUBLISHERS. AMSTERDAM, NL, vol. 46, no. 1, 1 août 2001 (2001-08-01), pages 49-63, XP004298796 ISSN: 0166-3615

## Description

La présente invention concerne un procédé de mesure destiné plus particulièrement à la mesure de jeux et d'affleurements entre des pièces de carrosserie présentant des bords respectifs en vis-à-vis.

La maîtrise de la conformité des jeux et affleurements sur les véhicules automobiles est un objectif important pour les constructeurs car elle contribue fortement à la perception de la qualité de fabrication des véhicules par les clients finaux.

Actuellement, afin de mesurer les jeux et affleurements, différentes technologies, vision notamment, sont mises en oeuvre. Des solutions utilisant des systèmes portables sont décrites dans les documents FR 2 756 626, US 5 129 010.

Le brevet EP0845656 divulgue un système de mesure de jeux et d'affleurement par triangulation optique, projetant deux plans lumineux parallèles sur les pièces à caractériser, afin de créer deux lignes de surbrillance. Le brevet US6529283, se rapporte à un dispositif conçu pour mesurer la largeur d'une séparation entre deux pièces, cette séparation étant délimitée par un bord de chacune des deux pièces. Le principe repose sur une irradiation lumineuse de cette zone de séparation, puis sur la récupération de la lumière réfléchie par lesdits bords, les sources lumineuses et les moyens de détection de la lumière réfléchie étant positionnés de façon optimisée. Enfin, la publication de Kosmopoulos et al, intitulée « automated inspection of gaps on the automobile production line through stereo vision and specular reflection », COMPUTERS IN INDUSTRY, ELSEVIER SCIENCE PUBLISHERS. AMSTERDAM, NL, vol.46, no. 1, 1 août 2001 (2001-08-01), pages 49-63, XP004298796ISSN: 0166-3615, décrit une méthode permettant, par stéréo vision, de mesurer des jeux et des affleurements entre la structure d'un véhicule automobile et différents éléments de carrosserie, comme par exemple, des portes ou un capot, aptes à être montés sur ladite carrosserie.

Toutefois, l'utilisation de pistolets portables implique la réalisation des mesures en dehors du flux de production et ces systèmes s'avèrent peu pratiques pour une utilisation unitaire en ligne de production, et leur emploi est donc limité à des opérations de contrôle par prélèvement hors ligne de production.

Pour la réalisation de mesures automatiques et unitaires en ligne de production, il convient de recourir à des stations de mesures équipées de capteurs fixes ou de capteurs embarqués sur bras robots, par exemple.

Les systèmes de mesure optique de jeux et affleurements peuvent utiliser deux types de technologie vision, à savoir une technologie monovision à triangulation ou une technologie de stéréovision.

Le principe de la mesure par vision repose sur l'analyse d'une ou plusieurs images acquises à l'aide d'une ou plusieurs caméras. Chaque trace sur laquelle on souhaite mesurer un jeu et affleurement est révélée par un dispositif d'éclairage qui émet une ou plusieurs raies de lumière laser projetées radialement à l'accostage à mesurer.

Sur le profil lumineux acquis sur une image donnée, un ensemble d'algorithmes va permettre de déterminer des points caractéristiques des segments du profil observé et une combinaison de projections permettra de quantifier les écarts représentant le jeu et l'affleurement.

Dans un procédé monovision à triangulation, le dispositif d'émission de lumière et la caméra sont intégrés dans un boîtier de façon à former un capteur. Les angles entre les différents éléments sont prédéterminés par construction et permettent de corriger les valeurs de jeu et d'affleurement lus sur l'image acquise afin de déterminer les valeurs vraies de jeu et d'affleurement.

En pratique, on s'efforce de positionner ledit capteur de manière telle que l'axe optique de la caméra soit sensiblement perpendiculaire à la trace formée par l'intersection des surfaces des pièces en accostage et le plan lumineux lamellaire. Ainsi, la valeur de jeu vu par la caméra est sensiblement égale à la valeur vraie dudit jeu.

En revanche, l'axe optique de la caméra est nécessairement incliné d'un certain angle par rapport au plan lumineux lamellaire. De ce fait, la valeur de l'affleurement vu par la caméra doit être corrigée pour déterminer la valeur vraie dudit affleurement.

Dans un procédé classique de mesure par stéréovision, la trace à mesurer reste révélée par un dispositif d'éclairage additionnel, ladite trace étant observée par deux caméras à faible champ de vision, donc dédiées à une trace particulière.

De manière générale, le positionnement des caméras est réalisé à façon, et nécessite sur le site l'exécution d'une procédure de calibration pour chaque paire de caméras.

Dans son principe, la stéréovision permet de déterminer les coordonnées tridimensionnelles d'un point dans le référentiel de la paire stéréoscopique si le point considéré est bien vu par les deux caméras.

A partir des coordonnées tridimensionnelles calculées pour les points remarquables définissant le jeu et l'affleurement, on détermine par calcul de distance entre ces points, la valeur dudit jeu et dudit affleurement.

Toutefois, le procédé stéréoscopique classique augmente grandement la dispersion de mesure. En effet, les valeurs de jeu et d'affleurement sont des distances, donc des mesures relatives non déterminées par lecture directe mais issues de calculs à partir des coordonnées absolues des points remarquables. La mesure des coordonnées des points étant soumise à une incertitude de mesure. Le calcul de la distance entre les points entraîne donc l'accumulation de ces imprécisions de mesures sur chaque coordonnée de chaque point.

Par ailleurs, on notera que le système par stéréovision nécessite deux caméras par trace à mesurer ainsi qu'un système de synchronisation d'acquisition d'images.

Ainsi, il existe un besoin pour un procédé de mesure de jeu et affleurement fiable, donnant une faible incertitude de mesure et pouvant être utilisé sur une station implantée en ligne de production pour faire des mesures sur des véhicules en mouvement.

Pour ce faire, la présente invention se rapporte à un procédé de mesure de jeux et affleurements entre deux pièces présentant des bords respectifs en vis-à-vis, caractérisé en ce qu'il comprend les étapes suivantes visant à :
- projeter sur les surfaces des pièces au moins une ligne lumineuse coupant lesdits bords des pièces à l'emplacement de la trace à mesurer;
- acquérir au moins deux images de ladite ligne lumineuse à l'aide d'au moins une paire de caméras,
- sur chaque image acquise, déterminer directement ou indirectement la valeur représentative du jeu et/ou affleurement dans le repère deux dimensions correspondant de l'image, les lignes de bord de pièces pouvant avoir été préalablement déterminées à partir d'images acquises avec un éclairage diffus
- déterminer par procédé stéréoscopique la position de la trace à mesurer dans le référentiel d'une paire de caméras, puis en déduire la position et l'orientation de chacune des caméras de cette paire dans le référentiel local de la trace à mesurer
- corriger la valeur ainsi obtenue pour le jeu et/ou affleurement en fonction de la position et de l'orientation de chaque caméra dans le référentiel local du jeu et affleurement à mesurer de manière à obtenir une valeur vraie du jeu et/ou de l'affleurement.

De cette manière, en procédant à une lecture directe de la distance représentative du jeu et/ou de l'affleurement considéré sur chaque image avant de corriger cette distance pour en obtenir la valeur vraie, on évite toute augmentation de la dispersion dans ladite mesure.

En effet, étant donné que le procédé selon l'invention ne calcule plus les coordonnées tridimensionnelles de points représentatifs avant de calculer la distance entre ces points, mais procède directement à la lecture de la distance en deux dimensions avant de corriger sa valeur, il n'existe plus cette accumulation d'imprécisions de mesure sur chaque coordonnée de chaque point représentatif utilisé pour calculer les distances de jeu et affleurement.

Avantageusement, l'on acquiert au moins deux images à l'aide de deux caméras ayant des angles de vue différents et capturant chacune au moins une image, le repère optique correspondant étant celui de chaque paire stéréoscopique formée.

Avantageusement, une valeur vraie du jeu et/ou affleurement est obtenue par moyennage des deux valeurs issues des deux images acquises par une paire de caméras.

De manière préférentielle, chacune des caméras acquiert une pluralité d'images.

Avantageusement, une valeur vraie du jeu et/ou affleurement est obtenue par moyennage des valeurs issues de cette pluralité d'images.

Avantageusement, le champ de vision et la résolution des caméras seront choisis de telle façon que plusieurs traces à mesurer puissent être visibles au sein d'une même image.

Selon une première variante de réalisation, on acquiert des images à l'aide d'au moins trois caméras formant au moins trois paires stéréoscopiques différentes.

Selon une deuxième variante de réalisation, on acquiert des images à l'aide d'au moins quatre caméras formant au moins six paires stéréoscopiques différentes.

Avantageusement encore, les valeurs vraies obtenues sont obtenues par moyennage des valeurs issues de différentes paires stéréoscopiques, elles-mêmes pouvant être ou non obtenues par moyennage de valeurs issues d'une pluralité.

L'invention sera mieux comprise à la lecture de la description qui va suivre donnée à titre d'exemple et faite en référence au dessin annexé sur lequel :

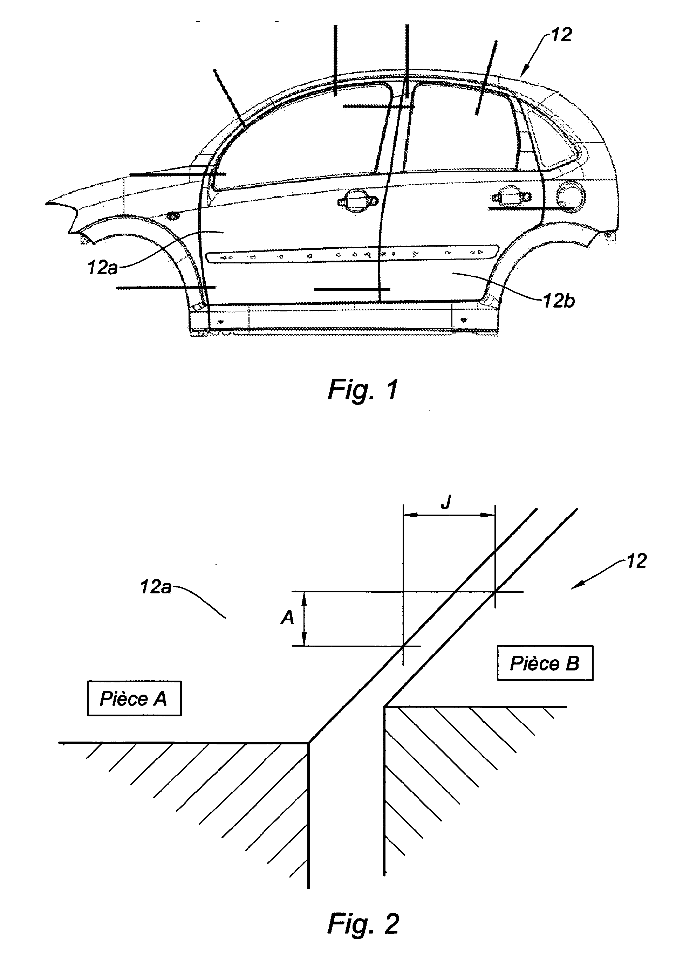

- La figure 1 montre des exemples de traces à mesurer sur une carrosserie d'un véhicule automobile,
- La figure 2 est une représentation schématique d'une zone présentant un jeu et un affleurement.
- La figure 3 est une image capturée par une caméra d'une trace lumineuse projetée sur une zone présentant un jeu et un affleurement
- La figure 4 est une vue du capteur d'images est des zones visibles par ce dernier.
- La figure 5 est une représentation schématique d'une paire stéréoscopique de caméras.
- La figure 6 est une représentation schématique montrant l'orientation et la position d'une caméra dans le repère locale de la trace à mesurer.
- La figure 7 est un diagramme montrant le principe de fonctionnement d'un système de mesure selon l'invention.
- La figure 8 est une vue de côté du système du véhicule de la figure 1, montrant les champs de vision de différentes caméras.

Comme décrit dans la demande FR 08/51468, un dispositif de mesures de jeux et d'affleurements par procédé de vision comprend un système adapté pour mesurer des jeux et affleurements sur plusieurs ouvrants et surfaces d'un véhicule automobile 12.

En particulier, le système est adapté pour mesurer des jeux et affleurements sur les ouvrants latéraux du véhicule 12, notamment les portes avant 12a et arrière 12b.

Des exemples de zones de mesure de jeux et d'affleurements sont représentés par des traits pleins coupant les surfaces concernées.

Les termes d'orientation et de position utilisés dans la suite de la description s'entendent par rapport aux orientations usuelles d'un véhicule.

Le système est fixe et comprend des moyens de projection 40 de ligne lumineuse 26, des moyens de prise d'images 18, des moyens de calcul 16 et des moyens d'entraînement du véhicule 12 par rapport aux moyens de projection de ligne lumineuse et aux moyens de prise d'images 14.

Les moyens d'entraînement seront avantageusement constitués par la ligne de montage elle-même, les éléments du système de mesures étant positionnés autour de cette dernière à la manière d'un portique.

Les moyens de prise d'images 18 sont agencés le long d'une arche sous laquelle le véhicule 12 défile et comportent un ensemble de capteurs d'images 18.

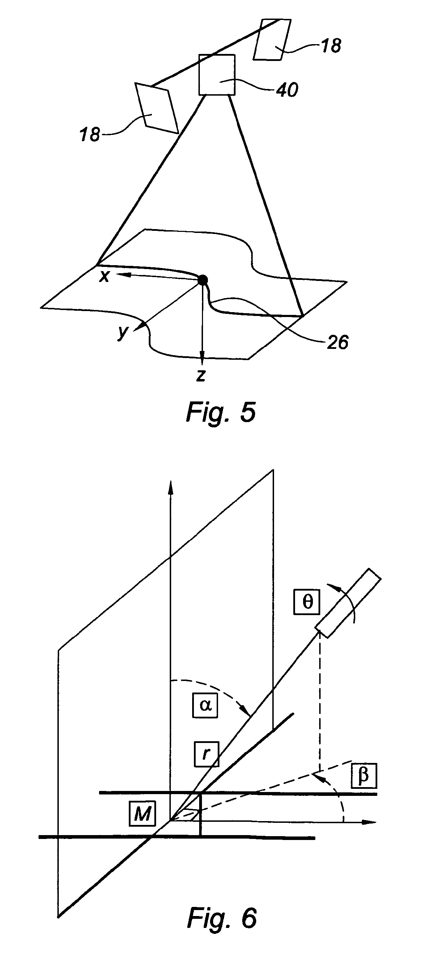

Les capteurs d'images 18 sont des caméras numériques à large champ de vision. La figure 5 illustre le champ de vision d'une caméra 18.

De manière préférentielle, la résolution de chaque capteur d'image est supérieure à 4 Mpx et leur fidélité intrinsèque est inférieure à 75 µm.

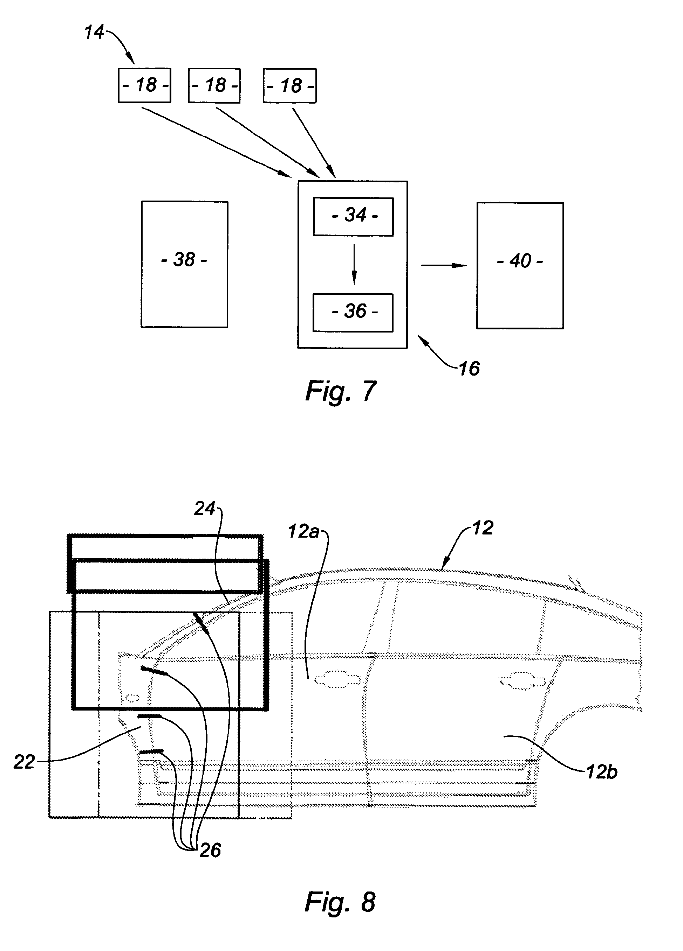

L'agencement et le large champ de vision de chaque caméra 18 (voir figure 5) permettent d'obtenir au moins une zone dans laquelle les champs de vision d'au moins deux caméras 18 se recouvrent au moins partiellement (voir figure 8), couvrant ainsi une même zone dans laquelle au moins une mesure de jeu et d'affleurement doit être effectuée.

En référence à la figure 8, le véhicule 12 est dans une première position qui permet au système 10 de mesurer les jeux et affleurements entre la partie avant de la porte avant 12a et, par exemple, l'aile avant 22 et le montant de baie 24.

Les moyens de projection 40 de ligne lumineuse 26 sont aptes à projeter sur les surfaces considérées au moins une ligne lumineuse 26 coupant sensiblement transversalement les bords de ces surfaces.

Les caméras 18 sont aptes à capter au moins deux images de chaque ligne lumineuse 26 sous deux angles de vues différents.

Ainsi, chaque ligne lumineuse 26 est vue par au moins deux capteurs d'images 18 distincts.

Les champs de vision des quatre capteurs d'images 18 disposés sur le côté gauche du véhicule sont représentés par des cadres sur la figure 8.

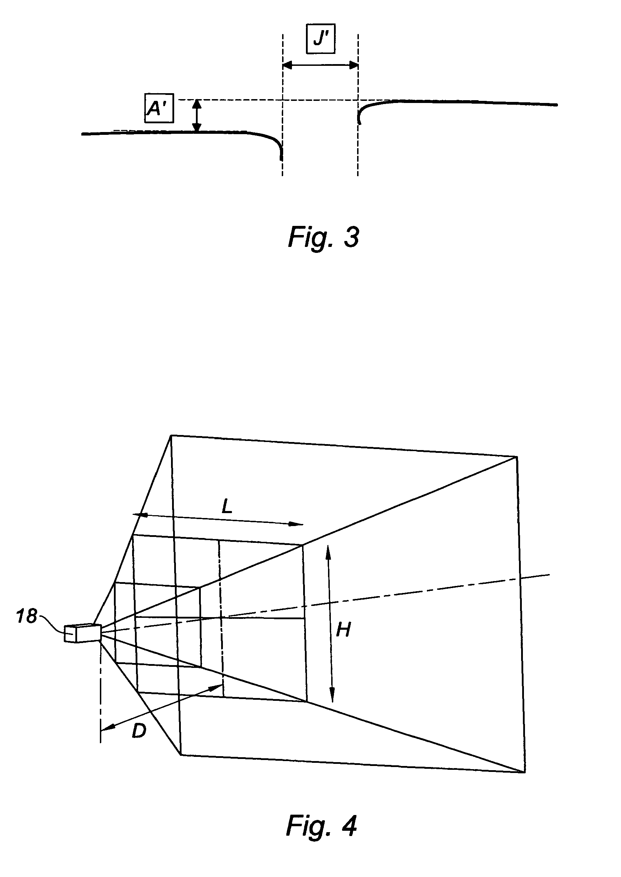

A partir de l'image ainsi capturée, dont un exemple est reproduit à la figure 3, il est donc possible à un module de traitement 34 du calculateur 16 de déterminer une valeur représentative de l'affleurement et une valeur du jeu à mesurer dans le référentiel deux dimensions de l'image.

A partir de ces informations, un module de calcul 36 permet de calculer les valeurs des jeux et affleurements selon le procédé objet de la présente invention.

Pour un jeu et affleurement donné à mesurer, on projette donc, comme expliqué précédemment, une ligne lumineuse 26 coupant les surfaces correspondantes au niveau de leur interstice.

Cette ligne lumineuse 26 est donc interrompue au niveau dudit interstice.

Chaque caméra 18 capture au moins une image de cette ligne lumineuse.

L'image capturée (figure 3) de la ligne lumineuse 26 concernée présente donc sensiblement deux segments de droite interrompus et décalés au niveau de l'interstice.

L'écart A' d'alignement entre ces deux segments (écarts verticaux) est représentatif de l'affleurement tandis que l'écart horizontal J' entre les segments de droites est représentatif du jeu.

A partir de l'image ainsi capturée, il est donc possible au module de traitement d'image 34 du calculateur 16 de déterminer une valeur représentative de l'affleurement et une valeur du jeu à mesurer dans le référentiel deux dimensions de l'image.

Les valeurs obtenues ne sont toutefois pas des valeurs vraies et il convient de les corriger pour obtenir une valeur vraie

Un module de calcul 36 permet de faire ces corrections et de déterminer les valeurs vraies des J&A.

Pour ce faire, on utilise les coordonnées de position et d'orientation de la caméra correspondante dans le référentiel local de la trace à mesurer.

Ainsi, pour chaque image captée de chaque caméra 18, il est possible d'exprimer une valeur vraie de jeu et une valeur vraie d'affleurement par application d'une fonction des coordonnées sphériques de position (r, β, α) et d'orientation (θ) de ladite caméra 18 appliquée à la valeur de jeu et/ou d'affleurement mesurée sur l'image capturée.

Ces paramètres, coordonnées sphériques de position et orientation caméra sont déterminables mathématiquement à partir de la position et de l'orientation de la trace à mesurer dans le repère paire stéréoscopique.

Pour chaque image capturée par chaque caméra 18, on obtient donc ainsi une valeur vraie du jeu et/ou de l'affleurement.

La présente description a été faite en se référant à une paire stéréoscopique, chaque caméra 18 acquérant une image.

Bien évidemment, chaque caméra 18 peut acquérir une multitude d'images, les valeurs des jeux et affleurements obtenues pouvant être moyennées avant ou après correction dans le repère optique correspondant.

La dispersion de mesure est encore réduite par moyennage des valeurs obtenues sur les différentes acquisitions d'images issues d'une même paire stéréoscopique.

Par ailleurs, il est également possible de réduire encore la dispersion des mesures par moyennage sur différentes paires stéréoscopique. Par exemple, si la ligne lumineuse 26 est vue par trois caméras 18, il est possible de constituer trois paires stéréoscopiques différentes. Une ligne lumineuse 26 vue par quatre caméras permettra de constituer six paires stéréoscopiques différentes.

## Revendications

1. Procédé de mesure de jeux et affleurements entre deux pièces (20, 22, 24) présentant des bords respectifs en vis-à-vis, *comprenant* les étapes suivantes visant à :
- projeter sur les surfaces des pièces au moins une ligne lumineuse (26) coupant lesdits bords des pièces à l'emplacement de la trace à mesurer;
- acquérir sous deux angles de vue *différents* au moins deux images de ladite ligne lumineuse à l'aide d'au moins une paire de caméras (18), *chaque caméra capturant au moins une image de la ligne lumineuse*,
***caractérisé en ce qu** il* comprend les étapes suivantes :
- sur chaque image acquise, déterminer directement la valeur représentative du jeu et/ou affleurement dans le repère deux dimensions correspondant de l'image, les lignes de bord de pièces pouvant avoir été préalablement déterminées à partir d'images acquises avec un éclairage diffus,
- déterminer par procédé stéréoscopique la position de la trace à mesurer dans le référentiel d'une paire de caméras, puis en déduire la position et l'orientation de chacune des caméras de cette paire dans le référentiel local de la trace à mesurer
- corriger, *pour chaque image*, la valeur *représentative* obtenue *précédemment* pour le jeu et/ou affleurement en fonction de la position et de l'orientation de chaque caméra dans le référentiel local du jeu et affleurement à mesurer, *par application d'une fonction des coordonnées sphériques de position et d'orientation de chacune desdites caméras*, fonction dont les paramètres sont *déterminés mathématiquement à partir de la position et de l'orientation de la trace à mesurer dans le repère paire stéréoscopique,* de manière à obtenir, *pour chaque image capturée par chaque caméra*, une valeur vraie du jeu et/ou de l'affleurement.

2. Procédé selon la revendication 1, **caractérisé en ce qu'**une valeur vraie du jeu et/ou affleurement est obtenue par moyennage des deux valeurs *vraies* issues des deux images acquises par une paire de caméras (18).

3. Procédé selon l'une quelconque des revendications 1 ou 2, **caractérisé en ce que** chacune des caméras (18) acquiert une pluralité d'images.

4. Procédé selon la revendication 3, **caractérisé en ce que** les valeurs des jeux et affleurements obtenues peuvent être moyennées avant ou après correction dans le repère optique correspondant.

5. Procédé selon l'une quelconque des revendications 1 à 4, **caractérisé en ce que** le champ de vision et la résolution des caméras seront choisis de telle façon que plusieurs traces à mesurer puissent être visibles au sein d'une même image.

6. Procédé selon l'une quelconque des revendications 1 à 5, **caractérisé en ce que** l'on acquiert des images à l'aide d'au mois trois caméras (18) formant au moins trois paires stéréoscopiques différentes.

7. Procédé selon la revendication 6, **caractérisé en ce que** l'on acquiert des images à l'aide d'au moins quatre caméras (18) formant au moins six paires stéréoscopiques différentes.

8. Procédé selon l'une quelconque des revendications 1 à 7, **caractérisé en ce que** les valeurs vraies obtenues sont obtenues par moyennage des valeurs *vraies* issues de différentes paires stéréoscopiques, elles-mêmes pouvant être ou non obtenues par moyennage de valeurs issues d'une pluralité *d'images*.

## Claims

1. Method for measuring clearance and flushness between two parts (20, 22, 24), the respective edges of which oppose one another, *comprising* the following steps:
- projecting onto the surfaces of the parts at least one line of light (26) which intersects said edges of the parts at the location of the trace to be measured;
- acquiring, *at two different viewing angles,* at least two images of said line of light using at least one pair of cameras (18), *each camera capturing at least one image of the line of light*,
***characterised in that*** it comprises the following steps:
- for each acquired image, directly determining the value representative of the clearance and/or flushness in the corresponding two-dimensional coordinate system of the image, it being possible for the edge lines of parts to have been predetermined on the basis of images acquired with diffused illumination,
- determining, by a stereoscopic method, the position of the trace to be measured in the frame of reference of a pair of cameras, then deducing therefrom the position and the orientation of each of the cameras of this pair in the local frame of reference of the trace to be measured,
- correcting, *for each image,* the *representative* value *previously* obtained for the clearance and/or flushness as a function of the position and the orientation of each camera in the local frame of reference of the clearance and flushness to be measured, *by applying a function of the spherical position and orientation coordinates of each of said cameras,* the parameters of which function are *determined mathematically on the basis of the position and the orientation of the trace to be measured in the stereoscopic pair coordinate system*, so as to obtain, *for each image captured by each camera,* a true value of the clearance and/or the flushness.

2. Method according to claim 1, **characterised in that** a true value of the clearance and/or flushness is obtained by averaging the two *true* values from the two images acquired by a pair of cameras (18).

3. Method according to either claim 1 or claim 2, **characterised in that** each of the cameras (18) acquires a plurality of images.

4. Method according to claim 3, **characterised in that** the clearance and flushness values obtained can be averaged before or after correction in the corresponding optical coordinate system.

5. Method according to any one of claims 1 to 4, **characterised in that** the field of view and the resolution of the cameras will be selected in such a way that a plurality of traces to be measured may be visible within a single image.

6. Method according to any one of claims 1 to 5, **characterised in that** the images are acquired by means of at least three cameras (18) forming at least three different stereoscopic pairs.

7. Method according to claim 6, **characterised in that** the images are acquired by means of at least four cameras (18) forming at least six different stereoscopic pairs.

8. Method according to any one of claims 1 to 7, **characterised in that** the true values obtained are obtained by averaging the *true* values from different stereoscopic pairs, which themselves may or may not be obtained by averaging values from a plurality *of images*.

## Patentansprüche

1. Verfahren zur Messung von Spalten und Bündigkeiten zwischen zwei Bauteilen (20, 22, 24) mit einander gegenüberliegenden Rändern, das die folgenden Schritte enthält, die darauf abzielen:
- auf die Flächen der Bauteile mindestens eine Lichtlinie (26) zu projizieren, welche die Ränder der Bauteile an der Stelle der zu messenden Spur schneidet;
- unter zwei verschiedenen Sichtwinkeln mindestens zwei Bilder der Lichtlinie mit Hilfe mindestens eines Paars von Kameras (18) zu erfassen, wobei jede Kamera mindestens ein Bild der Lichtlinie aufnimmt,
**dadurch gekennzeichnet, dass** es die folgenden Schritte enthält:
- in jedem erfassten Bild direkt den repräsentativen Wert des Spalts und/oder der Bündigkeit im entsprechenden zweidimensionalen Bezugssystem des Bilds zu bestimmen, wobei die Randlinien von Bauteilen ggf. vorher ausgehend von mit einer diffusen Beleuchtung erfassten Bildern bestimmt wurden,
- durch stereoskopisches Verfahren die Position der zu messenden Spur im Bezugssystem eines Paars von Kameras zu bestimmen, dann davon die Position und die Ausrichtung jeder der Kameras dieses Paars im lokalen Bezugssystem der zu messenden Spur abzuleiten,
- für jedes Bild den vorher erhaltenen repräsentativen Wert für den Spalt und/oder die Bündigkeit abhängig von der Position und der Ausrichtung jeder Kamera im lokalen Bezugssystem des zu messenden Spalts und Bündigkeit durch Anwendung einer Funktion der sphärischen Positions- und Ausrichtungskoordinaten jeder der Kameras zu korrigieren, einer Funktion, deren Parameter ausgehend von der Position und der Ausrichtung der zu messenden Spur im stereoskopischen Paarbezugssystem mathematisch bestimmt werden, um für jedes von jeder Kamera aufgenommene Bild einen wahren Wert des Spalts und/oder der Bündigkeit zu erhalten.

2. Verfahren nach Anspruch 1, **dadurch gekennzeichnet, dass** ein wahrer Wert des Spalts und/oder der Bündigkeit durch Mittelung der zwei wahren Werte erhalten wird, die von den zwei durch ein Paar von Kameras (18) erfassten Bildern stammen.

3. Verfahren nach einem der Ansprüche 1 oder 2, **dadurch gekennzeichnet, dass** jede der Kameras (18) eine Vielzahl von Bildern erfasst.

4. Verfahren nach Anspruch 3, **dadurch gekennzeichnet, dass** die erhaltenen Werte der Spalte und Bündigkeiten vor oder nach der Korrektur im entsprechenden optischen Bezugssystem gemittelt werden können.

5. Verfahren nach einem der Ansprüche 1 bis 4, **dadurch gekennzeichnet, dass** das Sichtfeld und die Auflösung der Kameras so gewählt werden, dass mehrere zu messende Spuren innerhalb eines gleichen Bilds sichtbar sein können.

6. Verfahren nach einem der Ansprüche 1 bis 5, **dadurch gekennzeichnet, dass** Bilder mit Hilfe von mindestens drei Kameras (18) erfasst werden, die mindestens drei unterschiedliche stereoskopische Paare bilden.

7. Verfahren nach Anspruch 6, **dadurch gekennzeichnet, dass** Bilder mit Hilfe von mindestens vier Kameras (18) erfasst werden, die mindestens sechs verschiedene stereoskopische Paare bilden.

8. Verfahren nach einem der Ansprüche 1 bis 7, **dadurch gekennzeichnet, dass** die erhaltenen wahren Werte durch Mittelung der wahren Werte erhalten werden, die von verschiedenen stereoskopischen Paaren stammen, die ihrerseits durch Mittelung von von einer Vielzahl von Bildern stammenden Werten erhalten werden können oder nicht.
